# EUROPEAN PATENT SPECIFICATION

(11) **EP 2 960 780 B1**
(45) Date of publication and mention of the grant of the patent: **20.05.2020**
(21) Application number: 15173998.4
(22) Date of filing: 26.06.2015
(51) Int. Cl.: G06F 3/12, B65B 11/00

(54) **IMAGE FORMING APPARATUS AND IMAGE FORMING METHOD**
BILDERZEUGUNGSVORRICHTUNG UND BILDERZEUGUNGSVERFAHREN
APPAREIL DE FORMATION D'IMAGES ET PROCEDE DE FORMATION D'IMAGES

(30) Priority: 27.06.2014 JP 2014132454
(43) Date of publication of application: 30.12.2015
(73) Proprietor: Kyocera Document Solutions Inc., Osaka-shi, Osaka 540-8585 (JP)
(72) Inventor: TAKI, Kosuke, Osaka, Osaka 540-8585 (JP)
(74) Representative: Treeby, Philip David William

(56) References cited:
- US-A1- 2013 067 865

## Description

The present disclosure relates to an image forming apparatus and an image forming method, and particularly relates to an image forming apparatus having a capability of printing a wrapping paper for packaging a three-dimensional object, and an image forming method using the same capability.

In recent years, image forming apparatuses, such as printers, copying machines, and multifunctional peripherals, have been in widespread use. Image forming apparatuses have been installed not only in offices, and the like, but also in shops, such as convenience stores, where many and unspecified persons come in and out. With such image forming apparatuses, there are provided a variety of services including printing out of photographs or electronic data, resident's cards, and various tickets, in addition to copying service.

In the typical art, for example, an image forming apparatus has been disclosed which is capable of printing a wrapping paper as one of such services. With this art, on the basis of the number of printed matters (for example, photographs) and the size thereof, a development view of a wrapping paper for packaging the printed matters is printed.

US 2013/067865 was found in the European Search Report

According to the present invention there is provided an image forming apparatus having a capability of printing a wrapping paper for packaging a three-dimensional object, comprising: an image reading part, acquiring an image of an object matter placed on a document table, a dimension acquisition part, acquiring dimensions of the three-dimensional object on the basis of the image of one face of the three-dimensional object, and the image of another face, crossing the one face of the three-dimensional object, the images having been acquired by the image reading part, a paper selection part, selecting a paper capable of packaging the three-dimensional object on the basis of the dimensions of the three-dimensional object, the dimensions having been acquired by the dimension acquisition part, and an image forming part, outputting a wrapping paper, having been printed with an image on the paper, the paper having been selected by the paper selection part, characterized by a packaging mode selection part, requesting a user to select a packaging mode for the three-dimensional object; a pattern selection part, requesting a user to select a pattern to be printed on the paper, a preview display part operable to display a preview of an overlapped portion of the wrapping paper that will occur after the packaging, with the selected pattern shown thereon, based on the selected packaging mode and the selected pattern, wherein the preview shows whether a component of the pattern will be hidden under the overlapped portion; and a printing location adjusting part, operable to adjust a printing location of the pattern on the paper by dragging of the pattern in a touch screen and shifting, wherein the result of said adjustment is reflected in said preview.

According to a second aspect of the present invention there is provided an image forming method, being implemented by an image forming apparatus having a capability of printing a wrapping paper for packaging a three-dimensional object, the method comprising: acquiring an image of an object matter placed on a document table, acquiring dimensions of the three-dimensional object on the basis of the acquired image of one face of the three-dimensional object, and the acquired image of another face, crossing the one face of the three-dimensional, selecting a paper capable of packaging the three-dimensional object on the basis of the acquired dimensions of the three-dimensional object, characterized by requesting a user to select a packaging mode for the three-dimensional object; accepting a selection of the packaging mode; requesting a user to select a pattern to be printed on the paper; accepting a selection of the pattern; displaying a preview of an overlapped portion of the wrapping paper that will occur after the packaging, with the selected pattern shown thereon, based on the selected packaging mode and the selected pattern, wherein the preview shows whether a component of the pattern will be hidden under the overlapped portion; receiving instructions from the user to adjust a printing location of the component of the pattern on the paper by dragging of the pattern and shifting; displaying a preview of the result of said adjustment; and outputting a wrapping paper, having been printed with an image on the selected paper.
FIG. 1 is a schematic configuration figure showing the entire configuration of a multifunctional peripheral in one embodiment of the present disclosure;
FIG. 2 is a figure showing a hardware configuration of the multifunctional peripheral in one embodiment of the present disclosure;
FIG. 3 is a functional block diagram illustrating a capability of the multifunctional peripheral in one embodiment of the present disclosure;
FIG. 4 is a flow chart giving one example of wrapping paper printing procedure that is taken with the multifunctional peripheral in one embodiment of the present disclosure;
FIG. 5 is a figure giving one example of guidance screen displayed by the multifunctional peripheral in one embodiment of the present disclosure;
FIG. 6 is a figure giving one example of guidance screen displayed by the multifunctional peripheral in one embodiment of the present disclosure;
FIG. 7 is a figure giving one example of packaging mode selection screen displayed by the multifunctional peripheral in one embodiment of the present disclosure;
FIG. 8A is a figure giving one example of development view for a particular packaging mode in one embodiment of the present disclosure;
FIG. 8B is a figure giving one example of development view for a particular packaging mode in one embodiment of the present disclosure;
FIG. 8C is a figure giving one example of development view for a particular packaging mode in one embodiment of the present disclosure;
FIG. 9 is a figure giving one example of setting confirmation screen displayed by the multifunctional peripheral in one embodiment of the present disclosure;
FIG. 10 is a figure giving one example of pattern providing screen displayed by the multifunctional peripheral in one embodiment of the present disclosure;
FIG. 11 is a figure giving one example of pattern selection screen displayed by the multifunctional peripheral in one embodiment of the present disclosure;
FIG. 12 is a figure giving one example of pattern location adjusting screen displayed by the multifunctional peripheral in one embodiment of the present disclosure; and
FIG. 13 is a figure giving one example of final confirmation screen displayed by the multifunctional peripheral in one embodiment of the present disclosure.

Hereinbelow, one embodiment of the present disclosure will be more specifically explained with reference to the drawings. In the following explanation, the present disclosure will be implemented as a digital multifunctional peripheral.

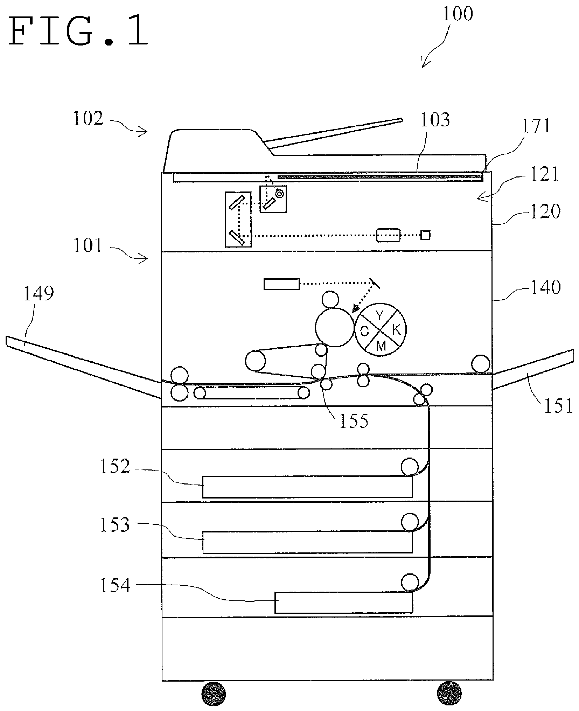

FIG. 1 is a schematic configuration figure showing one example of the entire configuration of the digital multifunctional peripheral in the present embodiment. As shown in FIG. 1, a multifunctional peripheral 100 is provided with a main body 101 and a platen cover 102, which is mounted above the main body 101. The main body 101 includes an image reading part 120 and an image forming part 140. On top of the main body 101, there is provided a document table 103, which is formed of a transparent plate, such as a contact glass. The document table 103 can be opened and closed by operating the platen cover 102. On the front face of the multifunctional peripheral 100, an operation panel 171 is provided. The operation panel 171 is used for a user to give an instruction for starting of copying, and other instructions. In addition, the operation panel 171 also allows the user to confirm the conditions of the multifunctional peripheral 100 or the settings.

In the upper portion of the main body 101, an image reading part 120 is provided. The image reading part 120 reads an image of a document, using a scanning optical system 121. The image reading part 120 generates image data, which is digital data of the image.

The image forming part 140 prints the image data on a paper. This image data is generated by the image reading part 120, or is received from another apparatus through a network (not shown). The image forming part 140 feeds a paper to a transfer part 155 from a manual feed tray 151, or a paper feeding cassette 152, 153, 154. A transfer part 155 transfers a toner image. The paper on which the toner image has been transferred in the transfer part 155 is delivered to a delivery tray 149.

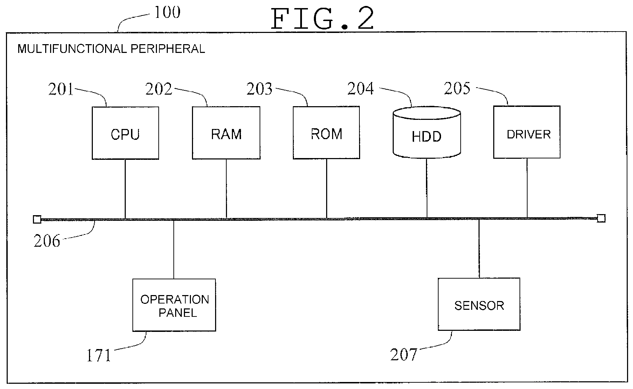

FIG. 2 is a hardware configuration diagram for a control system in the multifunctional peripheral. In the multifunctional peripheral 100 of the present embodiment, a CPU (Central Processing Unit) 201, an RAM (Random Access Memory) 202, an ROM (Read Only Memory) 203, an HDD (Hard Disk Drive) 204, and the image reading part 120, and a driver 205 are connected to one another through an internal bus 206. The driver 205 corresponds to the respective parts of the image forming part 140. The ROM 203, the HDD 204, and the like, store programs. The CPU 201 controls the multifunctional peripheral 100 in accordance with a command of the control program. For example, the CPU 201 utilizes the RAM 202 as a working area. The CPU 201 controls the operation of the driver 20 by giving and receiving data or a command from/to the driver 205. The HDD 204 is also used for accumulation of image data. This image data is obtained by the image reading part 120, or is received from another apparatus through the network.

To the internal bus 206, an operation panel 171 and various sensors 207 are connected. The operation panel 171 accepts operation of the user. The operation panel 171 supplies a signal based on the operation to the CPU 201. According to a control signal from the CPU 201, the operation panel 171 displays an operation screen on a touch panel display provided therefor. The sensor 207 includes various sensors. Those various sensors are a sensor for detection of opening/closing the platen cover 102; a sensor for detection of a document on the document table; a temperature sensor for a fixing unit; a sensor for detection of a paper or document conveyed.

The CPU 201 implements each of the following means (functional blocks) by executing a program stored in, for example, the ROM 203. In addition, the CPU 201 controls the operation of each means in response to a signal from these sensors.

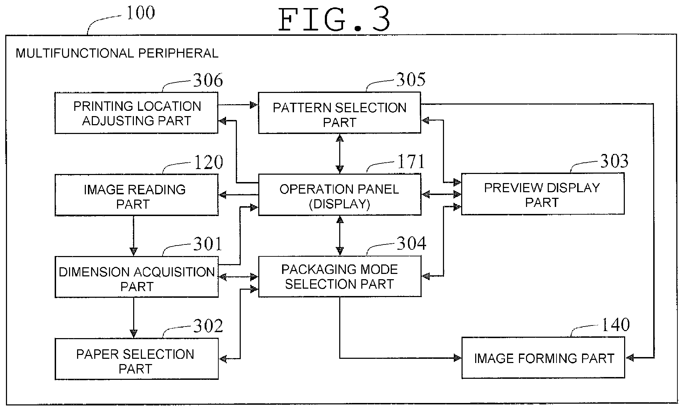

FIG. 3 is a functional block diagram for the multifunctional peripheral of the present embodiment. As shown in FIG. 3, the multifunctional peripheral 100 includes a dimension acquisition part 301, a paper selection part 302, a preview display part 303, and a packaging mode selection part 304.

The dimension acquisition part 301 acquires dimensions of a three-dimensional object on the basis of images of two faces constituting the three-dimensional object that have been acquired by the image reading part 120. By disposing the reading object faces of a three-dimensional object as a packaging object on the document table 103 in turn, the images of the two faces are read by the image reading part 120. Here, the two faces refer to a first face and another face (hereinafter, referred to as a second face) that crosses the first face. For example, when the first face is a bottom face, the second face is any one of the side faces.

The dimension acquisition part 301 measures the dimensions of, for example, "length" and "breadth" from the image of the first face. Hereinafter, an image of the first face is referred to as a bottom face image. The dimension acquisition part 301 measures the dimension of "height" from the image of the second face. Hereinafter, an image of the second face is referred to as a side face image. The three-dimensional object is preferably a rectangle parallelepiped. However, the three-dimensional object may be any three-dimensional object, for example, a truncated square pyramid, if it has an outer shape that allows packaging it practically as a rectangle parallelepiped. In this case, the dimension acquisition part 301 acquires the lengths of the two sides of a rectangle circumscribing the first face in the bottom face image. In addition, of the sides constituting a rectangle circumscribing the second face in the side face image, the dimension acquisition part 301 acquires the length of the side that does not constitute the circumscribing rectangle of the first face.

The paper selection part 302 selects a paper capable of packaging the three-dimensional object on the basis of the dimensions of the three-dimensional object that have been acquired by the dimension acquisition part 301. Such dimensions are "length", "breadth", and "height". The paper selection part 302 selects a minimum size of paper capable of packaging the three-dimensional object on the basis of the sizes of papers disposed on the manual feed tray 151 and the paper feeding cassettes 152, 153, and 154; a development view according to a later-described packaging mode; and the dimensions of the three-dimensional object. For example, the paper selection part 302 selects a minimum size of paper allowing printing of a development view according to the dimensions of the three-dimensional object and the packaging mode. On the paper that has been selected by the paper selection part 302, a prescribed image is printed in the image forming part 140. Then, the paper is outputted as a wrapping paper. In the present embodiment, on one face of the paper, folding lines (a development view) for packaging the three-dimensional object are printed. In addition, on the other face of the paper, a later-described decorative pattern is printed.

The preview display part 303 displays an appearance after packaging. This appearance after packaging is based on the dimensions of the three-dimensional object that have been acquired by the dimension acquisition part 301, and the information about the paper (the paper size) that has been selected by the paper selection part 302. In the present embodiment, the preview display part 303 displays the appearance after packaging on the touch panel display of the operation panel 171. The multifunctional peripheral 100 in the present embodiment is configured to allow a packaging mode to be selected as described later. Therefore, the packaging mode that has been selected by the user is reflected to the preview display.

The packaging mode selection part 304 requests the user to select a packaging mode for the three-dimensional object. In the present embodiment, the packaging mode selection part 304 requests the user to select a packaging mode through the touch panel display of the operation panel 171. For example, the packaging mode selection part 304 displays the appearances of the packaging modes on the touch panel display with selection buttons, and the like, and accepts selection by the user.

In addition, the multifunctional peripheral 100 of the present embodiment is provided with a pattern selection part 305 and a printing location adjusting part 306. The pattern selection part 305 requests the user to select a decorative pattern to be printed on the paper that has been selected by the paper selection part 302. In the present embodiment, the pattern selection part 305 requests the user to select a packaging mode through the touch panel display of the operation panel 171. For example, the pattern selection part 305 displays the appearances of the patterns on the touch panel display with selection buttons, and the like, and accepts selection by the user. The user can also select pattern-less printing.

The printing location adjusting part 306 adjusts the printing location for a pattern on the paper. For example, the printing location adjusting part 306 displays an appearance including an overlapped portion of a wrapping paper on the touch panel display of the operation panel 171, and accepts adjustment of the location of the pattern in the overlapped portion, or the like, by the user.

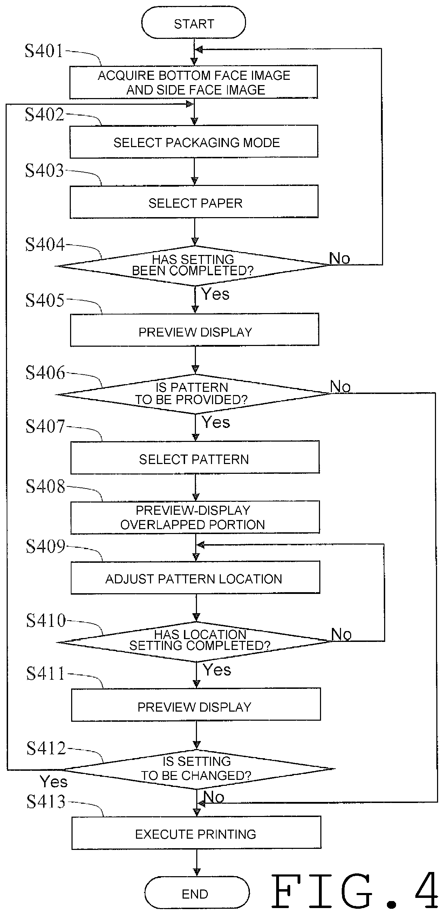

FIG. 4 is a flow chart giving one example of wrapping paper printing procedure that is taken with the multifunctional peripheral 100. For example, the user inputs an instruction for starting the wrapping paper mode to print a wrapping paper through the operation panel 171. The wrapping paper printing procedure is started by, for example, inputting this starting instruction as a trigger.

Once the procedure is started, the dimension acquisition part 301 requests the user to acquire a bottom face image and a side face image (step S401). In the present embodiment, at this time, the dimension acquisition part 301 displays a guidance screen for acquisition of a bottom face image and a side face image on the touch panel display of the operation panel 171. This guidance screen is not particularly limited.

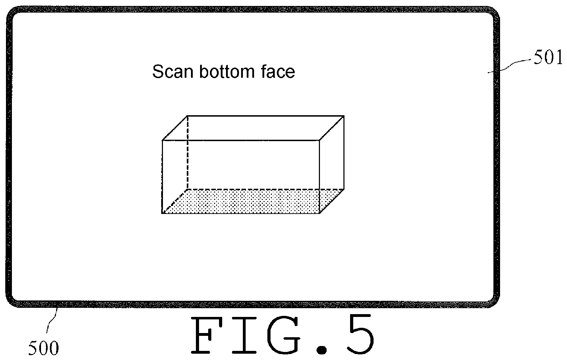

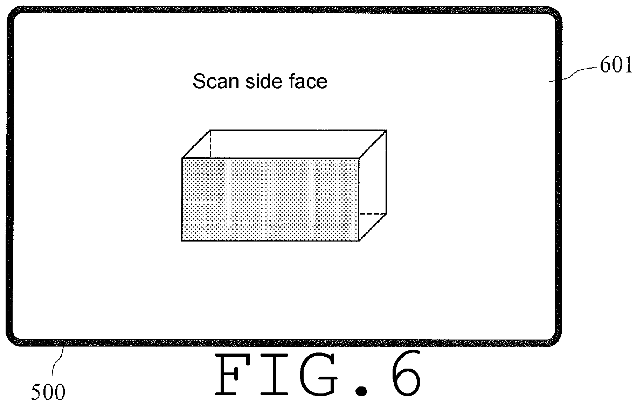

FIG. 5 and FIG. 6 are figures each giving one example of guidance screen that is displayed on the touch panel display 500 at this time. In this example, on the bottom face image acquisition guidance screen 501, a text of "Scan bottom face" and a figure showing the bottom face of a three-dimensional object are displayed. Also, on the side face image acquisition guidance screen 601, a text of "Scan side face" and a figure showing the side face of a three-dimensional object are displayed. With the bottom face image acquisition guidance screen 501 being displayed, the user depressing the start button of the operation panel 171 will start image acquisition by the image reading part 120. Then, at the completion of the image acquisition, the side face image acquisition guidance screen 601 will be displayed on the touch panel display 500.

When acquisition of the bottom face image and the side face image is completed, the dimension acquisition part 301 will notify the fact to the packaging mode selection part 304. The packaging mode selection part 304, upon having received the notification, will request the user to select a packaging mode (step S402).

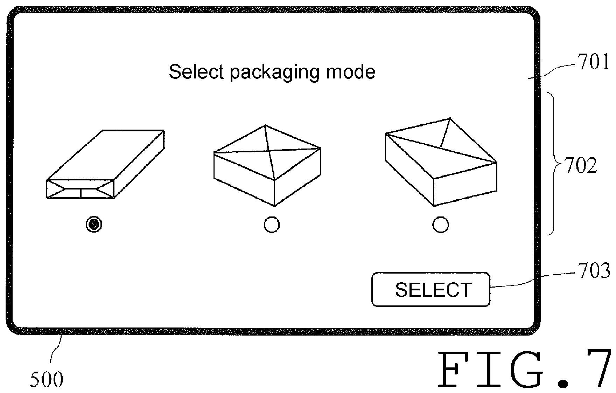

FIG. 7 is a figure giving one example of packaging mode selection screen that the packaging mode selection part 304 displays on the touch panel display 500 at this time. As shown in FIG. 7, the packaging mode selection screen 701 provides a packaging mode selection field 702 and a "Selection" button 703, which is used for confirming the selection. In this example, the packaging mode selection field 702 includes figures showing the appearances of "jointed wrapping", "Furoshiki wrapping", and "diagonal wrapping", and radio buttons for selecting one of these. FIG. 7 shows a state in which "jointed wrapping" has been selected as a default. With any one of the packaging modes having been selected, the user clicking the "Selection" button 703 will cause the selected packaging mode to be inputted to the packaging mode selection part 304.

At the completion of selection of the packaging mode, the packaging mode selection part 304 will notify the fact to the paper selection part 302. The paper selection part 302, upon having received the notification, will select a paper capable of packaging the three-dimensional object on the basis of the above-described technique (step S403). If the paper capable of packaging is not available, the paper selection part 302 will notify the user of the fact through the touch panel display of the operation panel 171, or the like.

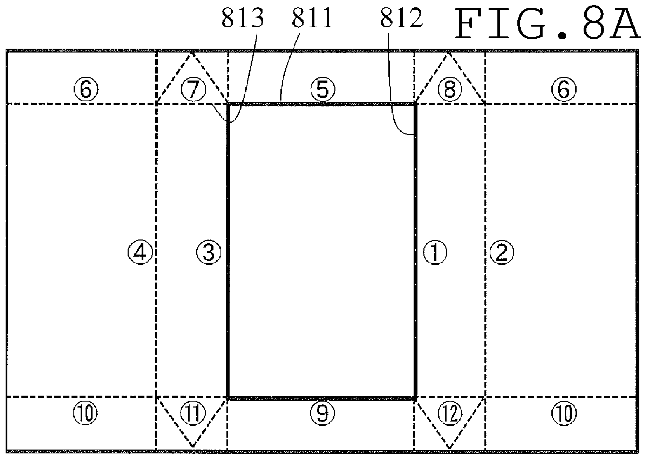

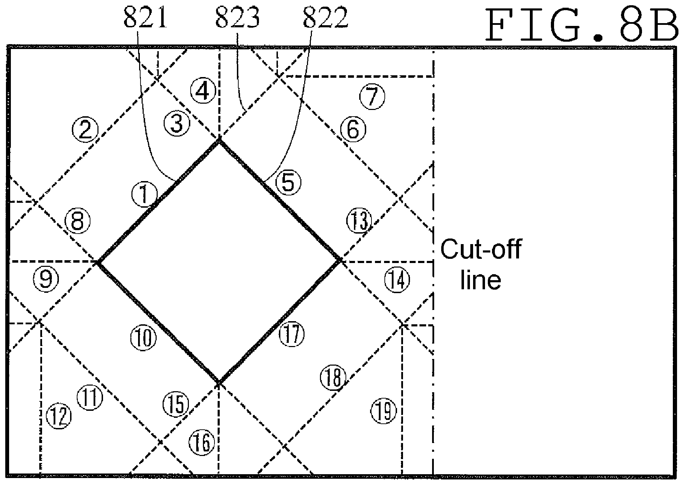

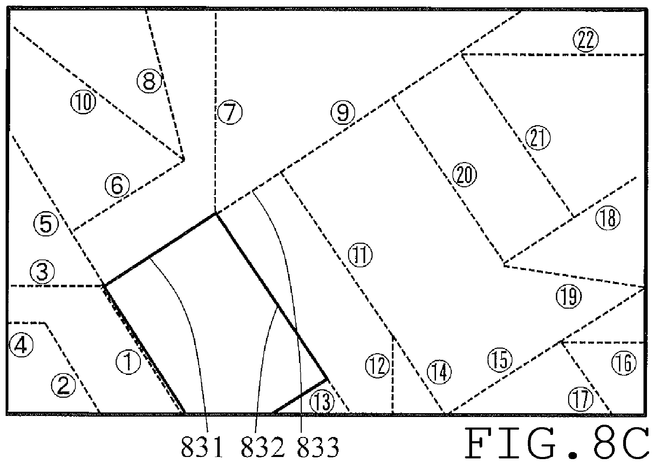

FIG. 8A, FIG. 8B, and FIG. 8C are figures showing a development view of each of the packaging modes given as examples in FIG. 7. FIG. 8A corresponds to "jointed wrapping". FIG. 8B corresponds to "Furoshiki wrapping". In this example, a cutoff line, which indicates an unnecessary portion of the wrapping paper to be cut off, is also displayed. FIG. 8C corresponds to "diagonal wrapping". The paper selection part 302 selects a paper by applying the "length", "breadth", and "height" acquired by the dimension acquisition part 301 to the development view of the packaging mode selected by the user. In FIG. 8A to FIG. 8C, the thick lines indicate the portion where the bottom face of the three-dimensional object is to be disposed. In the example given in FIG. 8A, the "length", "breadth", and "height" are, for example, sides 811, 812, and 813 (and sides opposed to these), respectively. Likewise, in the example given in FIG. 8B, the "length", "breadth", and "height" are, for example, sides 821, 822, and 823 (and sides opposed to these), respectively. Likewise, in the example given in FIG. 8C, the "length", "breadth", and "height" are, for example, sides 831, 832, and 833 (and sides opposed to these), respectively.

The paper selection part 302, upon having selected a paper capable of packaging, will notify the fact to the packaging mode selection part 304. In the present embodiment, the packaging mode selection part 304, upon having received the notification, will display the information including the dimensions of the three-dimensional object that have been acquired by the dimension acquisition part 301, and the packaging mode selected by the user on the touch panel display of the operation panel 171. This is not particularly limited. Then, the user will be inquired of whether the settings are as desired (step S404).

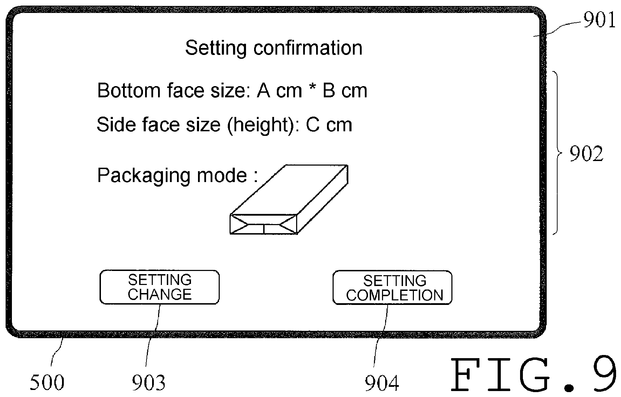

FIG. 9 is a figure giving one example of setting confirmation screen that the packaging mode selection part 304 will display on the touch panel display 500 at this time. As shown in FIG. 9, the setting confirmation screen 901 includes a setting display field 902, a "Setting change" button 903, which is used for changing the setting, and a "Setting completion" button 904, which is used for establishing the setting. In this example, the setting display field 902 includes the "length" and "breadth" acquired from the bottom face image, the "height" acquired from the side face image, and the packaging mode selected in the packaging mode selection screen 701.

In such state, when the user clicks the "Setting change" button 903, the packaging mode selection part 304 will notify the fact to the dimension acquisition part 301. In response to the notification, the dimension acquisition part 301 will request the user to acquire a bottom face image and a side face image (S401, through No at step S404) .

On the other hand, the user may click the "Setting completion" button 904. In the case where the "Setting completion" button 904 is clicked, the packaging mode selection part 304 will input the information including the dimensions of the three-dimensional object acquired by the dimension acquisition part 301, the information about paper (the paper size) selected by the paper selection part 302, and the packaging mode selected by the user to the preview display part 303. In response to the pertinent input, the preview display part 303 will display the appearance after packaging on the touch panel display 500 of the operation panel 171 (S405, through Yes at step S404) .

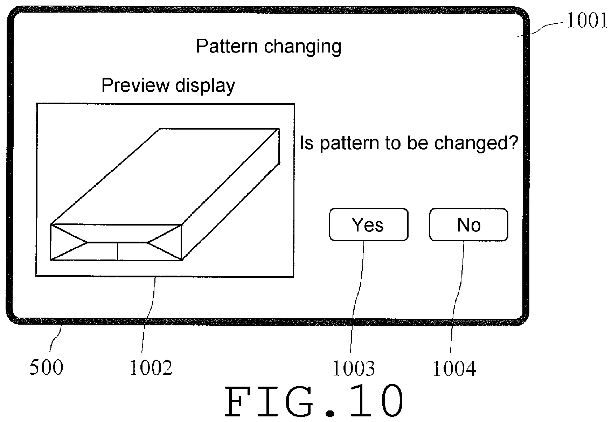

FIG. 10 is a figure giving one example of pattern providing screen that the preview display part 303 displays on the touch panel display 500 at this time. As shown in FIG. 10, the pattern providing screen 1001 includes a preview display field 1002, a "Yes" button 1003, which is used to provide a pattern, and a "No" button 1004, which is used when no pattern is to be provided. In the preview display part 1002, an appearance after packaging that the preview display part 303 has created on the basis of the dimensions of the three-dimensional object, the paper size, and the packaging mode that have been inputted will be displayed.

In this state, when the user clicks the Yes" button 1003, the preview display part 303 will notify the fact to the pattern selection part 305. In response to the notification, the pattern selection part 305 will request the user to select a pattern that is to be printed on the paper selected by the paper selection part 302 (S407, through Yes at step S406) . The pertinent pattern is a decorative pattern that is to be printed on the front face of the wrapping paper.

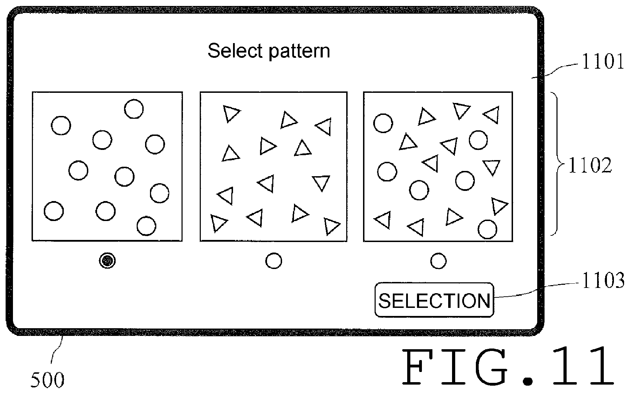

FIG. 11 is a figure giving one example of pattern selection screen that the pattern selection part 305 will display on the touch panel display 500 at this time. As shown in FIG. 11, the pattern selection screen 1101 includes a pattern selection field 1102 and a "Selection" button 1103, which is used for confirming the selection. In this example, the pattern selection field 1102 is comprised of figures showing a pattern in which there are disposed a plurality of characters A, which are indicated with circle marks for convenience in the figure, a pattern in which there are disposed a plurality of characters B, which are indicated with triangle marks for convenience in the figure, and a pattern in which there are disposed a plurality of characters A and characters B, and radio buttons for selecting one of these. FIG. 11 shows a state in which the pattern of "characters A" is selected as a default. With any one of the patterns having been selected, the user clicking the "Selection" button 1103 will cause the selected pattern to be inputted to the pattern selection part 305.

At the completion of selection of the pattern, the pattern selection part 305 will input the information about the selected pattern to the preview display part 303. The preview display part 303 will display the appearance of an overlapped portion for the packaging mode selected by the user with the selected pattern being provided therefor (step S408).

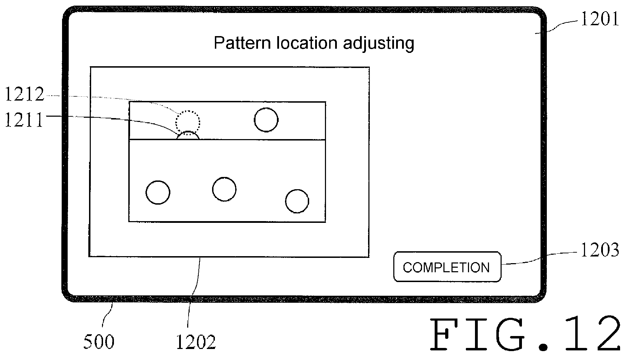

FIG. 12 is a figure giving one example of pattern location adjusting screen that the preview display part 303 displays on the touch panel display 500 at this time. As shown in FIG. 12, the pattern location adjusting screen 1201 includes a preview display field 1202 and a "Completion" button 1203, which is used for establishing the pattern. In the preview display field 1202, the appearance that has been created by the preview display part 303 with the pattern being provided will be displayed. In the present embodiment, in the preview display field 1202, the state of the pattern in a portion where an overlap will occur in the paper after packaging will be preview-displayed.

In the example given in FIG. 12, the state of the faces with which both ends of the paper overlap one upon another in the "jointed wrapping" is displayed. In this example, the pattern 1211 is hidden under the upper-layer paper. The user employs, for example, his own finger or a touch pen to drag the pattern 1211 on the touch panel display 500 to shift it to a location 1212 where the entire pattern is not hidden (step S409). The shifting operation is recognized by the printing location adjusting part 306, and is inputted to the preview display part 303 through the pattern selection part 305. Thereby, in the preview display field 1202, a preview display to which the pattern shifting operation by the user has been reflected is given. In the present embodiment, the decorative pattern and the folding lines are printed on different faces of the paper. In the present embodiment, on the touch panel display 500, the pattern location can be adjusted on the basis of the state after packaging, as described above. With such a configuration, the user can obtain a desired disposition of a pattern with extreme ease.

In the present embodiment, the characters as the components of a pattern are disposed in a state in which each of them can be individually recognized. Thereby, it is possible that a particular component of a pattern rather than the entire pattern can be shifted independently of the others. Here, a scheme in which, in a face with which both ends of the paper overlap one upon another, the location of a particular component of a pattern is shifted has been used as an example. However, a scheme that allows the user to optionally select a face in which a particular component of a pattern is to be shifted can be adopted. Further, it is also possible to adopt a scheme in which not only shifting but also addition or deletion of a component of a pattern can be performed.

Pattern component shifting as described above can be performed until the user clicks the "Completion" button 1203 (in other words, the path from No at S410 to Yes at step S409 can be followed as many times as required) . When the user clicks the "Completion" button 1203, the preview display part 303 will display the appearance including the pattern after packaging on the touch panel display of the operation panel 171. In addition, the preview display part 303 will inquire the user of whether to execute printing or not (Yes or No at step S412).

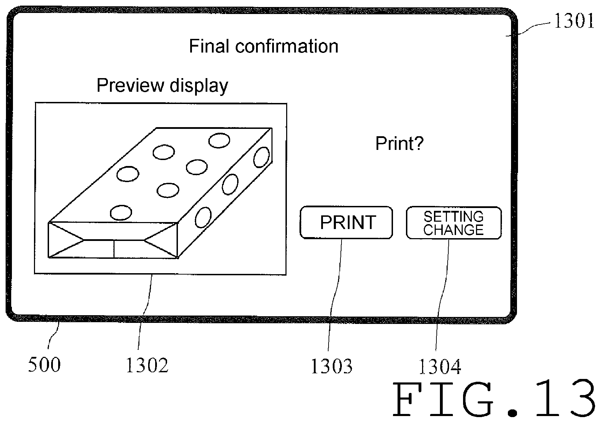

FIG. 13 is a figure giving one example of final confirmation screen that the preview display part 303 will display on the touch panel display 500 at this time. As shown in FIG. 13, the final confirmation screen 1301 includes a preview display field 1302, a "Print" button 1303, which is used for executing printing, and a "Setting change" button 1304, which is used for changing the setting that has been inputted. In the preview display field 1302, the dimensions of the three-dimensional object, the paper size, the packaging mode, and the appearance after packaging that have been inputted will be displayed. The appearance after packaging will be created by the preview display part 303 on the basis of the selected pattern.

In this state, the user clicking the "Print" button 1303 will cause the preview display part 303 to notify the fact to the packaging mode selection part 304 and the pattern selection part 305 (No at step S412). In response to the notification, the packaging mode selection part 304 and the pattern selection part 305 will instruct the image forming part 140 to print a wrapping paper under the conditions set. Thereby, in the image forming part 140, the wrapping paper will be printed (step S413).

In the present embodiment, as described above, on the face of a paper that is opposite to the face on which a decorative pattern is printed, a development view shown in FIG. 8, in other words, folding lines for packaging the three-dimensional object are printed. As shown in FIG. 8, in the development view, the numbers that indicate the order of folding in packaging are printed, and thus the user can easily package the three-dimensional object.

On the other hand, with the final confirmation screen 1301 shown in FIG. 13 being displayed, the user clicking the "Setting change" button 1304 will cause the preview display part 303 to notify the fact to the packaging mode selection part 304. In response to the notification, the packaging mode selection part 304 will display the packaging mode selection screen 701 on the touch panel display 500. Then, the packaging mode selection part 304 will request the user to select a packaging mode (S402, through Yes step S412). Thereby, the user can execute resetting, starting from selection of a packaging mode.

With the preview screen 1001 shown in FIG. 10 being displayed, the user clicking the "No" button 1004 will cause the preview display part 303 to notify the fact to the packaging mode selection part 304. In response to the notification, the packaging mode selection part 304 will instruct the image forming part 140 to print a wrapping paper (S413, through No at step S406).

As explained above, the multifunctional peripheral 100 uses the image reading part 120 to acquire the dimensions of a three-dimensional object. Thereby, the multifunctional peripheral 100 can prepare a wrapping paper for packaging the three-dimensional object. Therefore, the user can easily obtain a desired wrapping paper by acquiring images of two faces constituting the three-dimensional object.

In addition, the multifunctional peripheral 100 is provided with the preview display part 303. Therefore, the user can easily comprehend the state of after packaging. Further, the packaging mode selection part 304 is provided, whereby a desired packaging mode can be selected.

In addition, the pattern selection part 305 and the printing location adjusting part 306 are provided. Therefore, in an overlapping location of the packaging paper, or the like, the location of a decorative pattern can be freely adjusted.

Specifically, the applications for wrapping papers are not limited to packaging of printed matters as contemplated by the typical art. From the viewpoint of amount of demand, it can be supposed that the amount of demand for packaging of three-dimensional objects is larger than that for packaging of printed matters. However, the application that is contemplated by the typical art is printing of wrapping papers for use with printed matters. Therefore, the typical art cannot accommodate printing of wrapping papers for use with three-dimensional objects.

Contrarily to this, the image forming apparatus of the present disclosure can easily print wrapping papers for packaging three-dimensional objects.

The above-described embodiment does not restrict the technical scope of the present disclosure. In addition, by providing features other than those which have been already described, a variety of modifications or adaptations can be realized within the scope of the present disclosure. The invention being defined by the claims. For example, in the above-described embodiment, a configuration in which there are provided all of the preview display part 303, the packaging mode selection part 304, the pattern selection part 305, and the printing location adjusting part 306 has been explained as a particularly preferred one. However, the preview display part 303, the packaging mode selection part 304, the pattern selection part 305, and the printing location adjusting part 306 are optional components. Even an image forming apparatus that is not provided with these components can easily print a wrapping paper for packaging a three-dimensional object in a specific packaging mode. In addition, in the above-described embodiment, a configuration in which folding lines for packaging a three-dimensional object are printed on one face of a wrapping paper has been supposed. However, it is not essential to print all the folding lines. For example, even if the wrapping paper is printed only with lines indicating the location where a three-dimensional object is to be disposed and a part of the folding lines, it can function as a wrapping paper.

In addition, the flow chart shown in FIG. 4 can be altered in the order of the respective steps as appropriate, provided that an equivalent function is obtained. For example, the preview display step S405 can be performed before the setting completion confirmation step S404. In addition, in the above-described embodiment, there has been exemplified a configuration in which, in step S412, which inquires the user of whether to execute printing or not, clicking the "Setting change" button 1304 allows the user to make resetting, starting from selecting a packaging mode. However, the location where resetting is to be started may be specified to be a step, such as that for selecting providing of a pattern (step S406), rather than that for selecting a packaging mode.

In addition, in the above-described embodiment, the present disclosure has been implemented as a digital multifunctional peripheral. However, being not limited to digital multifunctional peripherals, the present disclosure is applicable to any image forming apparatuses, such as printers and copying machines.

As an industrial applicability, according to the present disclosure, a wrapping paper for packaging a three-dimensional object can be easily printed. Therefore, the image forming apparatus of the present disclosure is extremely useful as an image forming apparatus.

## Claims

1. An image forming apparatus having a capability of printing a wrapping paper for packaging a three-dimensional object, comprising:
an image reading part (120), acquiring an image of an object matter placed on a document table,
a dimension acquisition part (301), acquiring dimensions of the three-dimensional object on the basis of the image of one face of the three-dimensional object, and the image of another face, crossing the one face of the three-dimensional object, the images having been acquired by the image reading part (120),
a paper selection part (302), selecting a paper capable of packaging the three-dimensional object on the basis of the dimensions of the three-dimensional object, the dimensions having been acquired by the dimension acquisition part (301), and
an image forming part (140), outputting a wrapping paper, having been printed with an image on the paper, the paper having been selected by the paper selection part (302),
**characterized by**
a packaging mode selection part (304), requesting a user to select a packaging mode for the three-dimensional object;
a pattern selection part (305), requesting a user to select a pattern to be printed on the paper,
a preview display (303) part operable to display in a touch panel display (500) a preview of an overlapped portion of the wrapping paper that will occur after the packaging, with the selected pattern shown thereon, based on the selected packaging mode and the selected pattern, wherein the preview shows whether a component of the pattern will be hidden under the overlapped portion; and
a printing location adjusting part (306), operable to adjust a printing location of the pattern on the paper by dragging of the pattern in the touch panel display (500) and shifting, wherein the result of said adjustment is reflected in said preview.

2. The image forming apparatus according to claim 1, wherein
the image forming part (140) prints folding lines for packaging the three-dimensional object on one face of a paper.

3. The image forming apparatus according to claim 1 or 2, further comprising
the preview display part (303), displaying an appearance after packaging on the basis of the dimensions of the three-dimensional object, the dimensions having been acquired by the dimension acquisition part (301), and a piece of information about the paper, having been selected by the paper selection part (302).

4. The image forming apparatus according to any one of claims 1 to 3, wherein
the three-dimensional object is a rectangle parallelepiped.

5. An image forming method, being implemented by an image forming apparatus having a capability of printing a wrapping paper for packaging a three-dimensional object, the method comprising:
acquiring an image of an object matter placed on a document table,
acquiring dimensions of the three-dimensional object on the basis of the acquired image of one face of the three-dimensional object, and the acquired image of another face, crossing the one face of the three-dimensional,
selecting a paper capable of packaging the three-dimensional object on the basis of the acquired dimensions of the three-dimensional object, **characterized by**
requesting a user to select a packaging mode for the three-dimensional object;
accepting a selection of the packaging mode;
requesting a user to select a pattern to be printed on the paper;
accepting a selection of the pattern;
displaying a preview of an overlapped portion of the wrapping paper that will occur after the packaging, with the selected pattern shown thereon, based on the selected packaging mode and the selected pattern, wherein the preview shows whether a component of the pattern will be hidden under the overlapped portion;
receiving instructions from the user to adjust a printing location of the component of the pattern on the paper by dragging of the pattern and shifting;
displaying a preview of the result of said adjustment; and
outputting a wrapping paper, having been printed with an image on the selected paper.

## Patentansprüche

1. Bilderzeugungsvorrichtung mit der Fähigkeit zum Bedrucken von Einschlagpapier zum Verpacken eines dreidimensionalen Objekts, die Folgendes umfasst:
einen Bildleseteil (120) zum Erfassen eines Bildes eines auf einem Dokumententisch liegenden Objekts,
einen Abmessungserfassungsteil (301) zum Erfassen von Abmessungen des dreidimensionalen Objekts auf der Basis des Bildes von einer Fläche des dreidimensionalen Objekts und des Bildes einer anderen Fläche, die die eine Fläche des dreidimensionalen Objekts kreuzt, wobei die Bilder vom Bildleseteil (120) erfasst wurden,
einen Papierauswahlteil (302) zum Auswählen von Papier, mit dem das dreidimensionale Objekt verpackt werden kann, auf der Basis der Abmessungen des dreidimensionalen Objekts, wobei die Abmessungen vom Bilderfassungsteil (301) erfasst wurden, und
einen Bilderzeugungsteil (140) zum Ausgeben eines Einschlagpapiers, das mit einem Bild auf dem Papier bedruckt ist, wobei das Papier vom Papierauswahlteil (302) ausgewählt wurde,
**gekennzeichnet durch**
einen Verpackungsmodusauswahlteil (304), der einen Benutzer auffordert, einen Verpackungsmodus für das dreidimensionale Objekt auszuwählen;
einen Musterauswahlteil (305) zum Auffordern eines Benutzers, ein auf das Papier zu druckendes Muster auszuwählen,
einen Voransichtsanzeigeteil (303) mit der Aufgabe, in einem Touchpanel-Display (500) eine Voransicht eines überlappten Abschnitts des Einschlagpapiers anzuzeigen, der nach dem Verpacken auftreten wird, mit dem darauf gezeigten ausgewählten Muster, auf der Basis des gewählten Verpackungsmodus und des gewählten Musters, wobei die Voransicht zeigt, ob eine Komponente des Musters unter dem überlappten Abschnitt verborgen sein wird; und
einen Druckpositionsjustierteil (306) mit der Aufgabe, eine Druckposition des Musters auf dem Papier durch Ziehen des Musters im Touchpanel-Display (500) und Verschieben zu justieren, wobei das Ergebnis der genannten Justierung in der genannten Voransicht reflektiert ist.

2. Bilderzeugungsvorrichtung nach Anspruch 1, wobei
der Bilderzeugungsteil (140) Faltlinien zum Verpacken des dreidimensionalen Objekts auf eine Fläche eines Papiers druckt.

3. Bilderzeugungsvorrichtung nach Anspruch 1 oder 2, das ferner Folgendes umfasst:
den Voransichtsanzeigeteil (303) zum Anzeigen eines Aussehens nach dem Verpacken auf der Basis der Abmessungen des dreidimensionalen Objekts, wobei die Abmessungen vom Abmessungserfassungsteil (301) erfasst wurden, und einer Information über das Papier nach dem Auswählen durch den Papierauswählteil (302).

4. Bilderzeugungsvorrichtung nach einem der Ansprüche 1 bis 3, wobei das dreidimensionale Objekt ein rechteckiges Parallelepiped ist.

5. Verfahren zur Bilderzeugung, implementiert durch eine Bilderzeugungsvorrichtung mit der Fähigkeit, ein Einschlagpapier zum Verpacken eines dreidimensionalen Objekts zu bedrucken, wobei das Verfahren Folgendes beinhaltet:
Erfassen eines Bildes eines auf einem Dokumententisch liegenden Objekts,
Erfassen von Abmessungen des dreidimensionalen Objekts auf der Basis des erfassten Bildes von einer Fläche des dreidimensionalen Objekts und des erfassten Bildes einer anderen Fläche, die die eine Fläche des dreidimensionalen Objekts kreuzt,
Auswählen eines Papiers, mit dem das dreidimensionale Objekt verpackt werden kann, auf der Basis der erfassten Abmessungen des dreidimensionalen Objekts, **gekennzeichnet durch**
Auffordern eines Benutzers, einen Verpackungsmodus für das dreidimensionale Objekt auszuwählen;
Akzeptieren einer Auswahl des Verpackungsmodus;
Auffordern eines Benutzers, ein auf das Papier zu druckendes Muster auszuwählen;
Akzeptieren einer Auswahl des Musters;
Anzeigen einer Voransicht eines überlappten Abschnitts des Einschlagpapiers, der nach dem Verpacken auftreten wird, mit dem darauf gezeigten gewählten Muster, auf der Basis des gewählten Verpackungsmodus und des gewählten Musters, wobei die Voransicht zeigt, ob eine Komponente des Musters unter dem überlappten Abschnitt verborgen sein wird;
Empfangen von Befehlen vom Benutzer zum Justieren einer Druckposition der Komponente des Musters auf dem Papier durch Ziehen des Musters und Verschieben;
Anzeigen einer Voransicht des Ergebnisses der genannten Justierung; und
Ausgeben eines Einschlagpapiers nach dem Aufdrucken eines Bildes auf das gewählte Papier.

## Revendications

1. Appareil de formation d'image ayant une capacité d'impression d'un papier d'emballage pour emballer un objet tridimensionnel, comprenant :
une partie de lecture d'image (120), acquérant une image d'un objet placé sur une table de document ;
une partie d'acquisition de dimension (301), acquérant des dimensions de l'objet tridimensionnel sur la base de l'image d'une face de l'objet tridimensionnel et de l'image d'une autre face, traversant ladite face de l'objet tridimensionnel, les images ayant été acquises par la partie de lecture d'image (120) ;
une partie de sélection de papier (302), sélectionnant un papier capable d'emballer l'objet tridimensionnel sur la base des dimensions de l'objet tridimensionnel, les dimensions ayant été acquises par la partie d'acquisition de dimension (301) ; et
une partie de formation d'image (140), produisant un papier d'emballage, ayant été imprimé avec une image sur le papier, le papier ayant été sélectionné par la partie de sélection de papier (302),
l'appareil étant **caractérisé par** :
une partie de sélection de mode d'emballage (304), demandant à un utilisateur de sélectionner un mode d'emballage pour l'objet tridimensionnel ;
une partie de sélection de motif (305), demandant à un utilisateur de sélectionner un motif à imprimer sur le papier ;
une partie d'affichage d'aperçu (303), permettant d'afficher sur un panneau d'affichage tactile (500) un aperçu d'une partie superposée du papier d'emballage qui sera obtenue après l'emballage, avec le motif sélectionné qui y est montré, sur la base du mode d'emballage sélectionné et du motif sélectionné, l'aperçu montrant si un composant du motif sera masqué sous la partie superposée ; et
une partie de réglage d'emplacement d'impression (306), permettant de régler un emplacement d'impression du motif sur le papier en faisant glisser le motif sur le panneau d'affichage tactile (500) et en le déplaçant, le résultat dudit réglage étant reflété dans ledit aperçu.

2. Appareil de formation d'image selon la revendication 1, dans lequel :
la partie de formation d'image (140) imprime des lignes de pliage pour emballer l'objet tridimensionnel sur une face d'un papier.

3. Appareil de formation d'image selon la revendication 1 ou 2, comprenant en outre :
la partie d'affichage d'aperçu (303), affichant une apparence après l'emballage sur la base des dimensions de l'objet tridimensionnel, les dimensions ayant été acquises par la partie d'acquisition de dimension (301), et d'un élément d'information concernant le papier, ayant été sélectionné par la partie de sélection de papier (302).

4. Appareil de formation d'image selon l'une quelconque des revendications 1 à 3, dans lequel :
l'objet tridimensionnel est un parallélépipède rectangle.

5. Procédé de formation d'image, mis en œuvre par un appareil de formation d'image ayant une capacité d'impression d'un papier d'emballage pour emballer un objet tridimensionnel, le procédé comprenant les étapes consistant à :
acquérir une image d'un objet placé sur une table de document ;
acquérir des dimensions de l'objet tridimensionnel sur la base de l'image acquise d'une face de l'objet tridimensionnel et de l'image acquise d'une autre face, traversant ladite face de l'objet tridimensionnel ;
sélectionner un papier capable d'emballer l'objet tridimensionnel sur la base des dimensions acquises de l'objet tridimensionnel,
le procédé étant **caractérisé par** les étapes consistant à :
demander à un utilisateur de sélectionner un mode d'emballage pour l'objet tridimensionnel ;
accepter une sélection du mode d'emballage ;
demander à un utilisateur de sélectionner un motif à imprimer sur le papier ;
accepter une sélection du motif ;
afficher un aperçu d'une partie superposée du papier d'emballage qui sera obtenue après l'emballage, avec le motif sélectionné qui y est montré, sur la base du mode d'emballage sélectionné et du motif sélectionné, l'aperçu montrant si un composant du motif sera masqué sous la partie superposée ;
recevoir des instructions de l'utilisateur pour régler un emplacement d'impression du composant du motif sur le papier en faisant glisser le motif et en le déplaçant ;
afficher un aperçu du résultat dudit réglage ; et
produire un papier d'emballage, ayant été imprimé avec une image sur le papier sélectionné.
